# FASCICULE DE BREVET EUROPEEN

(11) **EP 0 743 434 B1**
(45) Date de publication et mention de la délivrance du brevet: **01.03.2000**
(21) Numéro de dépôt: 96400936.9
(22) Date de dépôt: 02.05.1996
(51) Int. Cl.: F02C 7/18, F02C 6/08

(54) **Dispositif pour prélever et refroidir de l'air chaud au niveau d'un moteur d'aéronef**
Vorkühlungswärmetauscher, integriert mit stromlinienförmiger Befestigungsvorrichtung einer Gasturbine
Precooling heat exchange arrangement integral with mounting structure fairing of gas turbine engine

(30) Priorité: 15.05.1995 FR 9505703
(43) Date de publication de la demande: 20.11.1996
(73) Titulaire: Aerospatiale Matra, 75016 Paris (FR)
(72) Inventeur: Porte, Alain, 31770 Colomiers (FR)
(74) Mandataire: Bonnetat, Christian

(56) Documents cités:
- EP-A- 0 469 825
- EP-A- 0 469 827
- US-A- 3 475 906
- US-A- 5 363 641

## Description

La présente invention concerne un dispositif pour prélever et refroidir de l'air chaud au niveau d'un moteur d'aéronef.

Pour assurer, en particulier, le conditionnement d'air à bord d'un aéronef, il est connu de prélever de l'air au niveau des compresseurs des moteurs de l'aéronef (turboréacteurs notamment, plus particulièrement turboréacteurs "double flux"). Une certaine quantité d'air chaud et sous pression est ainsi prélevée à la sortie des compresseurs basse pression et/ou haute pression du turboréacteur. Provenant de ces différentes sources, l'air doit traverser différents organes de commande (vannes pilotées par des thermostats, notamment) avant de pouvoir être mélangé et dosé, après quoi il est nécessaire de le refroidir une première fois (prérefroidissement) avant de l'acheminer vers les organes utilisateurs : groupe de conditionnement d'air, système de dégivrage, etc...

Jusqu'à présent, l'air de conditionnement est généralement prélevé en aval du ventilateur (soufflante) du moteur avant d'être dirigé vers l'échangeur thermique de prérefroidissement, ce qui présente l'inconvénient plus ou moins prononcé de détériorer les performances du moteur. En effet, l'échangeur thermique (air/air) de prérefroidissement est, de façon connue, généralement installé dans le mât qui supporte le réacteur, reliant la voilure à ce dernier, au niveau de la partie supérieure du mât à proximité du bord d'attaque de la voilure. L'air chaud sous pression provenant de différents étages du ou des compresseurs du moteur est refroidi par l'air provenant de la soufflante, qui traverse l'échangeur (auquel il est amené par une canalisation particulière) et est ensuite rejeté vers l'extérieur à la partie supérieure du mât, devant le bord d'attaque de la voilure.

Il en résulte une ponction d'un débit important d'air qui ne participe plus à la poussée du moteur. Par ailleurs, le fait de rejeter l'air de refroidissement à l'extérieur, comme indiqué, provoque des turbulences, traînées et perturbations aérodynamiques.

Pour éviter ces inconvénients, le document EP-A-0469825 décrit un dispositif pour prélever de l'air chaud sur un moteur d'aéronef et le refroidir, ledit moteur comprenant :
- un corps de moteur présentant des compresseurs, chambres de combustion et turbines,
- une soufflante disposée en amont du corps de moteur,
- un carénage comportant, d'amont en aval dans le sens d'écoulement de l'air provenant de la soufflante, une entrée d'air, un carter de soufflante et des carénages externe et interne de la veine d'air froid provenant de la soufflante,
- des bras de liaison entre le corps de moteur et le carter de soufflante, et
- un mât de support du moteur, relié, d'une part, à celui-ci, et d'autre part, à la voilure,
ledit dispositif étant du type comportant :
- au moins une prise d'air chaud à la sortie d'un étage des compresseurs du moteur,
- une prise d'air froid en aval de la soufflante du moteur,
- un échangeur thermique de prérefroidissement entre ledit air chaud et ledit air froid, ledit échangeur thermique étant agencé à la partie avant du mât de support du moteur, en étant traversé par ladite veine d'air froid qui sort de la soufflante et qui n'est pas dirigée vers les compresseurs,
- une première canalisation reliant ladite prise d'air chaud audit échangeur thermique,
- un carter perforé, formant l'étrave du mât de support du moteur, ledit carter étant disposé transversalement dans la veine d'air provenant de la soufflante entre lesdits carénages externe et interne de ladite veine d'air,
- une seconde canalisation s'étendant dans ledit mât vers la voilure de l'aéronef et les moyens utilisateurs, et
- des vannes de régulation des débits d'air.

L'objet de la présente invention est de perfectionner un tel dispositif.

A cette fin, selon l'invention, le dispositif du type rappelé ci-dessus est caractérisé en ce que ladite première canalisation présente une première dérivation traversant ledit carter et une seconde dérivation, la première et/ou la seconde dérivation étant munies d'une vanne de régulation, lesdites première et seconde dérivations s'étendant au moins sensiblement parallèlement l'une à l'autre et transversalement à la veine d'air froid et se réunissant au niveau de ladite seconde canalisation.

En particulier, dans ce cas, ledit carter peut présenter une section transversale en "fer à cheval", correspondant à celle de l'étrave du mât, dont la concavité est traversée par ladite seconde dérivation, la partie avant dudit carter étant traversée par ladite première dérivation.

Par ailleurs, soit l'air de ventilation, après avoir traversé l'échangeur, est guidé à l'intérieur du carénage interne de la veine d'air provenant de la soufflante, avant d'être évacué par des sorties prévues, respectivement, au niveau des chambres de combustion et/ou des turbines du moteur, soit l'air de ventilation est évacué par une sortie en écope de l'échangeur, une branche de la section transversale en "fer à cheval" du carter de l'échangeur présentant alors la forme d'une paroi définissant ladite sortie.

Selon une variante avantageuse, ladite paroi est un volet, articulé à une extrémité, assurant une régulation de température sur la sortie d'air de ventilation.

Selon une autre réalisation de l'invention, une vanne de régulation pilotant la sortie d'air de ventilation est disposée dans une canalisation de collecte dudit air, traversant l'échangeur thermique et menant au compartiment moteur.

Dans ce dernier cas, ledit échangeur thermique présente, de préférence, une forme hémi-cylindrique, limitée par des cloisons supérieure et arrière, cette dernière raccordée audit mât.

Selon encore une autre variante de l'invention, ledit échangeur thermique présente un carter au contour profilé de section transversale croissante pour son raccordement depuis un desdits bras de liaison entre le corps de moteur et le carter de soufflante, jusqu'à la base dudit mât.

Avantageusement, ledit carter profilé présente, au niveau de sa face concave, une surface perméable à l'air optimisant l'effet d'écope.

Selon une autre caractéristique de l'invention, les vannes de régulation des débits d'air chaud et/ou d'air froid sont commandées par des thermostats, prévus en aval dudit échangeur thermique.

Les figures du dessin annexé feront bien comprendre comment l'invention peut être réalisée. Sur ces figures, des références identiques désignent des éléments semblables.

La figure 1 est une vue en coupe longitudinale schématique d'un moteur d'aéronef, montrant un exemple de réalisation du dispositif selon l'invention.

La figure 2 est une vue partielle agrandie de la figure 1.

La figure 3 est une section de la figure 2 selon la ligne III-III.

La figure 4 est une figure analogue à la figure 2 illustrant un autre exemple de réalisation du dispositif selon l'invention.

Les figures 5 et 6 sont des sections selon les lignes respectives V-V et VI-VI de la figure 4, montrant deux variantes de la réalisation de la figure 4.

La figure 7 montre, en coupe longitudinale, un autre exemple d'agencement du dispositif selon l'invention.

La figure 8 est une vue en perspective schématique de l'échangeur thermique de la figure 7.

La figure 9 illustre une autre variante du dispositif de l'invention.

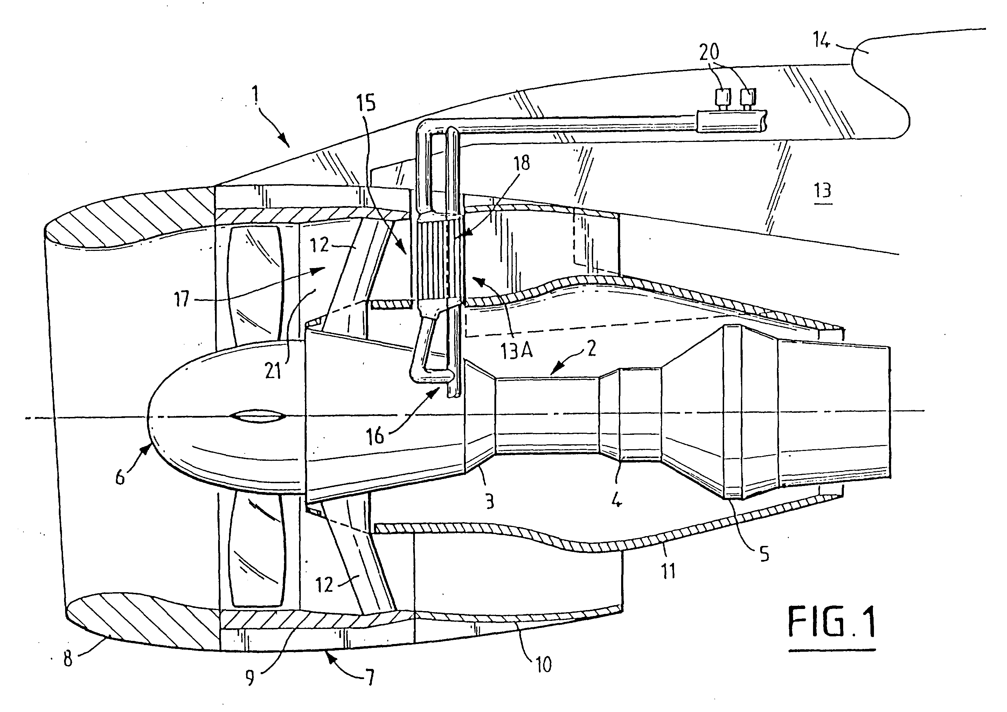

En premier lieu, il convient de décrire l'agencement général du moteur d'aéronef 1 représenté notamment sur la figure 1.

Le turboréacteur "double flux" montré comprend :
- un corps de moteur 2 présentant des compresseurs 3, chambres de combustion 4 et turbines 5,
- une soufflante 6 (ou ventilateur) disposée en amont du corps de moteur 2 et reliée à celui-ci,
- un carénage 7 comportant, d'amont en aval dans le sens d'écoulement de l'air provenant de la soufflante 6, une entrée d'air 8, un carter de soufflante proprement dit 9 et des carénages externe 10 et interne 11 de la veine d'air froid,
- des bras de liaison 12 entre le corps de moteur 2 et le carter de soufflante 9, et
- un mât de support 13 du moteur 1, relié, d'une part, à celui-ci et, d'autre part, à la voilure 14.

On notera que le carénage interne 11 du flux secondaire (veine d'air froid) contient, en plus du corps de moteur 2, des organes auxiliaires, tels que des pompes, alternateurs, régulateurs, notamment, qui sont refroidis par un flux d'air qui parcourt ce compartiment d'amont en aval.

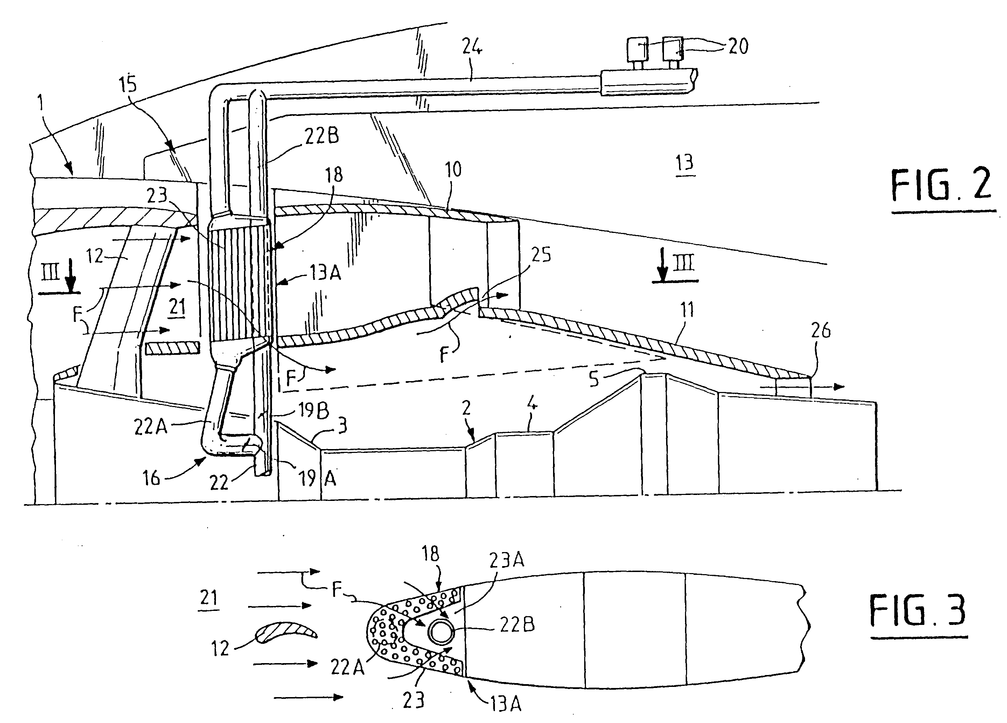

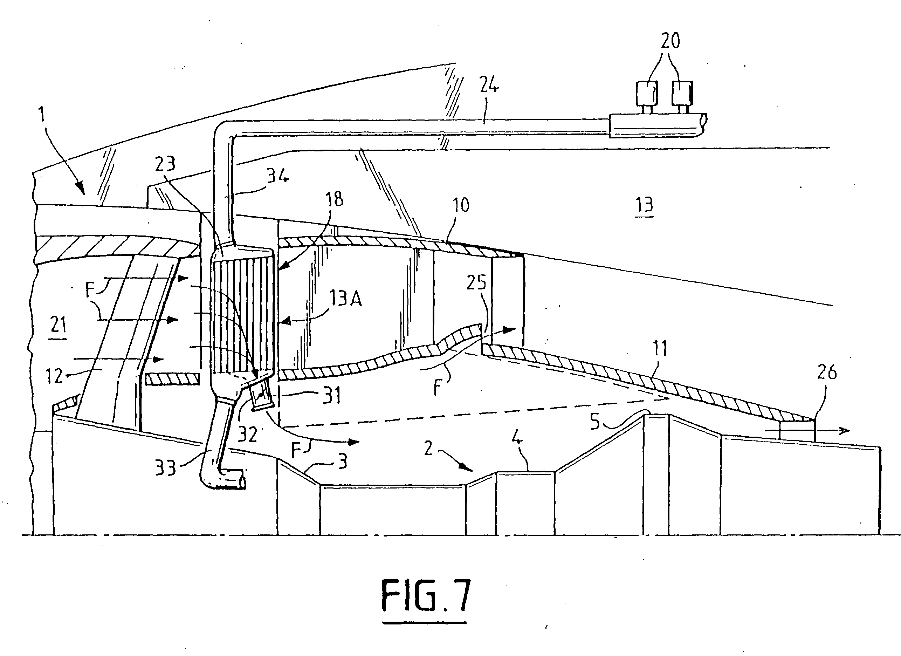

Par ailleurs, le dispositif 15 pour prélever et refroidir de l'air chaud au niveau du moteur 1 de l'aéronef comporte :
- une prise d'air chaud 16 à la sortie des étages basse pression et/ou haute pression des compresseurs 3 du moteur,
- une prise d'air froid 17 en aval de la soufflante 6 du moteur,
- un échangeur thermique 18 de prérefroidissement entre l'air chaud et l'air froid, et
- des vannes de commande 19 (figure 2) ou 31 (figure 7) des débits d'air chaud et/ou d'air froid, commandées, par exemple, par des thermostats 20.

Plus particulièrement, selon l'invention, l'échangeur thermique 18 est agencé à la partie avant 13A (étrave) du mât 13 de support du moteur 1 (ou d'un carénage de ce mât), en étant traversé par la veine d'air froid 21 (figures 2 et 3 notamment) qui sort de la soufflante 6 et n'est pas dirigée vers les compresseurs 3. Par "mât", on désigne donc ici le mât lui-même (partie structurale) ou un carénage de celui-ci (rôle aérodynamique et de cheminement des canalisations, en particulier).

Comme on le voit notamment sur les figures 2 et 3, dans un premier mode de réalisation, l'échangeur thermique 18 comprend généralement une première canalisation 22 de prélèvement d'air chaud au niveau des compresseurs basse pression et/ou haute pression du moteur, ladite canalisation 22 présentant une première dérivation 22A traversant un carter perforé 23 de l'échangeur, formant l'étrave 13A du mât 13 de support du moteur 1 et disposé transversalement (radialement) dans la veine d'air froid 21 provenant de la soufflante 6. Comme montré sur la figure 3 notamment, le carter 23 présente une section transversale en "fer à cheval", correspondant à celle de l'étrave 13A, dont la "concavité" 23A est traversée par une seconde dérivation 22B de la canalisation 22, la partie avant du carter étant traversée par la première dérivation 22A. Les deux dérivations 22A, 22B s'étendent ainsi au moins sensiblement parallèlement l'une à l'autre, et transversalement à la veine d'air froid 21, et se réunissent en une seconde canalisation 24 s'étendant dans le mât 13 vers la voilure de l'aéronef et les moyens utilisateurs (non représentés). Dans l'exemple de réalisation des figures 2 et 3, des vannes 19A, 19B pilotées par les thermostats 20 agencés sur la canalisation 24, permettent de réguler le flux d'air chaud provenant des compresseurs et traversant les dérivations 22A et 22B, tandis que la ventilation d'air froid est permanente. Comme montré par les flèches F sur les figures 2 et 3, l'air froid, après avoir traversé l'échangeur 18 (carter 23) en refroidissant ainsi l'air chaud véhiculé par la première dérivation 22A (essentiellement) et la deuxième dérivation 22B (accessoirement) est guidé, dans ce premier exemple, à l'intérieur du carénage interne 11 du flux secondaire, avant d'être évacué par les sorties 25 et 26 au niveau, respectivement, des chambres de combustion 4 et des turbines 5.

Plus précisément, la sortie annulaire 26 peut être considérée comme une simple mise à l'air libre. Par ailleurs, la sortie 25 peut être en outre définie par sa position par rapport au bord de fuite du carénage externe 10 où la vitesse et la pression de l'air sont différentes de celles de l'air atmosphérique, permettant à une sortie de géométrie particulière, dite "en écope", de travailler selon un régime différent en bénéficiant d'un effet d'aspiration.

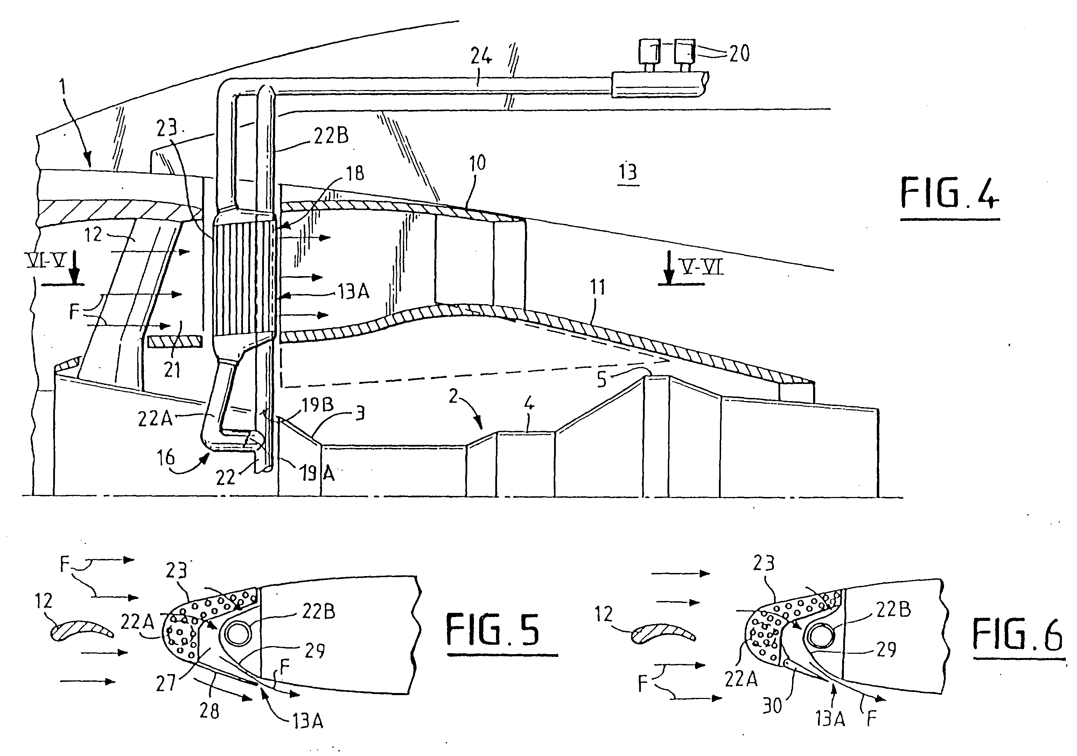

L'exemple de réalisation des figures 4 et 5 ne se distingue de l'exemple de réalisation des figures 2 et 3 que par l'évacuation de l'air de ventilation. On ne reviendra donc pas sur la description générale de l'échangeur 18 faite en regard des figures 2 et 3. Simplement, dans ce cas, on voit que la ventilation d'air froid est encore permanente, mais évacuée par une sortie en écope 27 de l'échangeur 18, dont le carter 23 présente alors une section transversale analogue à celle de l'exemple de la figure 3, mais dont une branche du "fer à cheval" est remplacée par une simple paroi 28 définissant la sortie 27, tandis que la dérivation 22B est isolée par une paroi arrondie 29. Cet agencement permet d'améliorer le phénomène d'aspiration.

Une variante de cette réalisation est montrée sur la figure 6. Dans ce cas, la paroi 28 est remplacée par un volet 30, articulé à son extrémité reliée au carter 23, assurant une régulation de température sur la sortie d'air froid. La ventilation n'est pas alors permanente, mais régulée.

On voit aussi que, dans le cas des figures 2 et 3, l'air de ventilation "sort" essentiellement à l'extérieur du carénage 10, tandis que, dans le cas des figures 4-6, l'air de ventilation sort à l'intérieur de ce carénage 10.

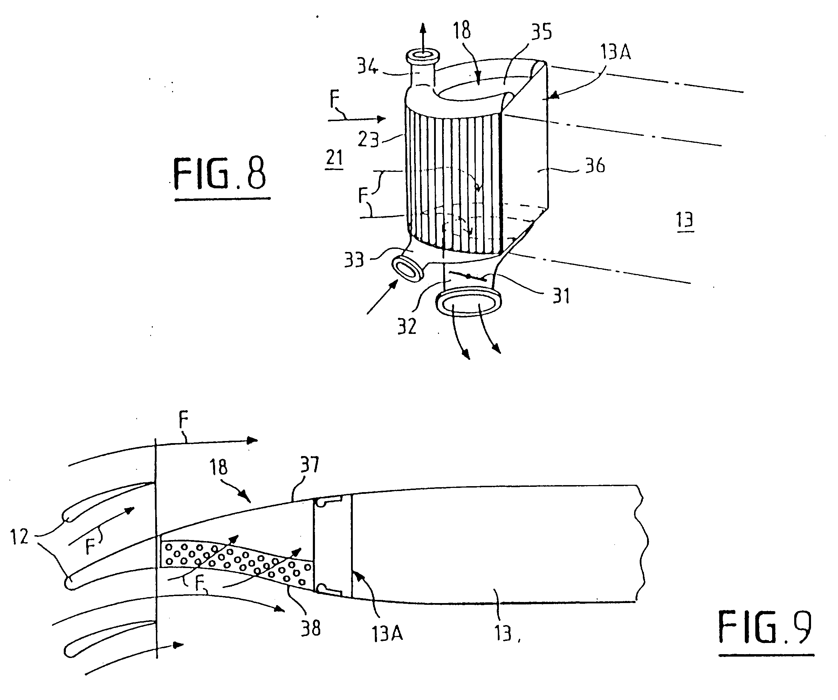

Pour une conception générale s'apparentant aux cas précédents, l'exemple de réalisation des figures 7 et 8 s'en distingue essentiellement par une vanne de régulation 31, pilotant la sortie d'air froid, disposée dans une canalisation 32 de collecte dudit air traversant l'échangeur thermique 18, canalisation 32 menant au compartiment moteur 2.

Dans ce cas, l'air chaud rentre dans l'échangeur 18 par un conduit 33, à la partie inférieure de l'échangeur 18, et sort par un conduit 34 raccordé au conduit 24 menant aux moyens utilisateurs (non représentés). Comme on le voit sur la figure 8, l'échangeur 18 présentant une forme hémicylindrique est de plus limité par des cloisons supérieure 35 et arrière 36, cette dernière raccordée au mât 13.

Comme dans l'exemple de réalisation des figures 2 et 3, l'air de ventilation est ensuite évacué par les sorties 25, 26 (flèches).

Comme on l'a vu ci-dessus dans la description générale du moteur d'aéronef 1, il est prévu entre le corps de moteur 2 et le carter de soufflante 9, une pluralité de bras de liaison (ou ailettes) 12, constituant un ensemble de plusieurs dizaines d'éléments. L'ensemble de ces ailettes joue principalement deux rôles : le premier est mécanique (liaison entre carters) et le second aérodynamique. Les ailettes redressent le flux d'air tournant rejeté par la soufflante, ce qui, en procurant un surcroît de poussée, améliore les performances du moteur tout en rendant l'installation du mât moins difficile.

La figure 9 illustre une variante de l'invention, dans laquelle l'aérodynamique de l'échangeur 18 est améliorée en modifiant la section d'une ailette 12 pour permettre un raccordement direct entre ladite ailette et l'échangeur, ce dernier présentant le contour profilé 37, représenté sur la figure 9, de section transversale croissante depuis l'ailette jusqu'à la base du mât 13, ce qui assure un meilleur écoulement de l'air, tout en conservant les mêmes possibilités d'échange et de régulation au niveau de l'échangeur.

Plus particulièrement, dans ce cas, l'échangeur profilé 18 présente, au niveau de sa face concave 38, une surface perméable à l'air, telle qu'une tôle perforée, optimisant l'effet d'écope tout en limitant les perturbations de l'écoulement de l'air moteur. Encore une fois, tous les principes de régulation de la température sur l'air froid ou l'air chaud traversant les conduits respectifs sont applicables dans cette variante.

D'une façon générale, l'invention permet ainsi de créer un phénomène d'aspiration de l'air provenant de la soufflante à travers la peau extérieure de l'échangeur, afin de limiter la traînée aérodynamique créée par une bifurcation dans un jet moteur, en essayant de maintenir un écoulement laminaire aussi longtemps que possible. En d'autres termes, il s'agit d'améliorer l'écoulement aérodynamique en aspirant la couche limite, ce qui présente pour avantage de réduire la traînée et permet à l'échangeur thermique de jouer un rôle appréciable en plus de sa fonction première.

## Revendications

1. Dispositif pour prélever de l'air chaud sur un moteur d'aéronef (1) et le refroidir, ledit moteur comprenant :
- un corps de moteur (2) présentant des compresseurs (3), chambres de combustion (4) et turbines (5),
- une soufflante (6) disposée en amont du corps de moteur (2),
- un carénage (7) comportant, d'amont en aval dans le sens d'écoulement de l'air provenant de la soufflante (6), une entrée d'air (8), un carter de soufflante (9) et des carénages externe (10) et interne (11) de la veine d'air froid provenant de la soufflante,
- des bras de liaison (12) entre le corps de moteur (2) et le carter de soufflante (9), et
- un mât de support (13) du moteur (1), relié, d'une part, à celui-ci, et d'autre part, à la voilure (14),
ledit dispositif étant du type comportant :
- au moins une prise d'air chaud (16) à la sortie d'un étage des compresseurs du moteur,
- une prise d'air froid (17) en aval de la soufflante (6) du moteur,
- un échangeur thermique (18) de prérefroidissement entre ledit air chaud et ledit air froid, ledit échangeur thermique étant agencé à la partie avant du mât de support (13) du moteur, en étant traversé par ladite veine d'air froid qui sort de la soufflante et qui n'est pas dirigée vers les compresseurs,
- une première canalisation (22) reliant ladite prise d'air chaud (16) audit échangeur thermique (18),
- un carter perforé (23), formant l'étrave (13A) du mât (13) de support du moteur (1), ledit carter étant disposé transversalement dans la veine d'air (21) provenant de la soufflante (6) entre lesdits carénages externe (10) et interne (11) de ladite veine d'air,
- une seconde canalisation (24) s'étendant dans ledit mât (13) vers la voilure (14) de l'aéronef et les moyens utilisateurs, et
- des vannes (19,31) de régulation des débits d'air,
caractérisé en ce que ladite première canalisation (22) présente une première dérivation (22A) traversant ledit carter (23) et une seconde dérivation (22B), la première (22A) et/ou la seconde dérivation (22B) étant munies d'une vanne de régulation (19A,19B), lesdites première (22A) et seconde (22B) dérivations s'étendant au moins sensiblement parallèlement l'une à l'autre et transversalement à la veine d'air froid (21) et se réunissant au niveau de ladite seconde canalisation (24).

2. Dispositif selon la revendication 1,
caractérisé en ce que ledit carter (23) présente une section transversale en "fer à cheval", correspondant à celle de l'étrave (13A) du mât (13), dont la concavité (23A) est traversée par ladite seconde dérivation (22B), la partie avant dudit carter (23) étant traversée par ladite première dérivation (22A).

3. Dispositif selon la revendication 2,
caractérisé en ce que l'air de ventilation, après avoir traversé l'échangeur, est guidé à l'intérieur du carénage interne (11) de la veine d'air provenant de la soufflante (6), avant d'être évacué par des sorties (25,26) prévues, respectivement, au niveau des chambres de combustion (4) et/ou des turbines (5) du moteur (1)

4. Dispositif selon la revendication 2,
caractérisé en ce que l'air de ventilation est évacué par une sortie en écope (27) de l'échangeur (18), une branche de la section transversale en "fer à cheval" du carter (23) de l'échangeur (18) présentant la forme d'une paroi (28) définissant ladite sortie.

5. Dispositif selon la revendication 4,
caractérisé en ce que ladite paroi est un volet (30), articulé à une extrémité, assurant une régulation de température sur la sortie d'air de ventilation.

6. Dispositif selon l'une des revendications 1 à 5,
caractérisé en ce qu'une vanne de régulation (31) pilotant la sortie d'air de ventilation est disposée dans une canalisation (32) de collecte dudit air, traversant l'échangeur thermique (18) et menant au compartiment moteur (1).

7. Dispositif selon la revendication 6,
caractérisé en ce que ledit échangeur thermique (18) présente une forme hémi-cylindrique, limitée par des cloisons supérieure (35) et arrière (36), cette dernière raccordée audit mât (13).

8. Dispositif selon la revendication 1,
caractérisé en ce que ledit échangeur thermique (18) présente un carter au contour profilé (37) de section transversale croissante pour son raccordement depuis un desdits bras de liaison (12) entre le corps de moteur (2) et le carter de soufflante (9), jusqu'à la base dudit mât (13).

9. Dispositif selon la revendication 8,
caractérisé en ce que ledit carter profilé (37) présente, au niveau de sa face concave (38), une surface perméable à l'air optimisant l'effet d'écope.

10. Dispositif selon l'une quelconque des revendications 1 à 9,
caractérisé en ce que les vannes de régulation (19A, 19B; 31) des débits d'air chaud et/ou d'air froid sont commandées par des thermostats (20), prévus en aval dudit échangeur thermique (18).

## Patentansprüche

1. Vorrichtung zur Entnahme von Heißluft an einem Flugzeugtriebwerk (1) und zu ihrer Kühlung, wobei das genannte Triebwerk folgendes umfaßt:
- einen Triebwerkskörper (2) mit Kompressoren (3), Brennkammern (4) und Turbinen (5),
- ein vor dem Triebwerkskörper (2) angeordnetes Gebläse (6),
- eine Verkleidung (7), die von vorn nach hinten in Strömungsrichtung der vom Gebläse (6) kommenden Luft einen Lufteinlaß (8), ein Gebläsegehäuse (9) und eine Außen- (10) und eine Innenverkleidung (11) des vom Gebläse kommenden Kaltluftstroms umfaßt,
- Verbindungsarme (12) zwischen dem Triebwerkskörper (2) und dem Gebläsegehäuse (9), und
- eine Stützstrebe (13) für das Triebwerk (1), die zum einem mit diesem und zum anderen mit dem Tragwerk (14) verbunden ist,
wobei die genannte Vorrichtung von dem Typ ist, der besteht aus
- mindestens einem Heißlufteinlaß (16) am Ausgang einer Stufe der Triebwerkskompressoren,
- einem Kaltlufteinlaß (17) hinter dem Triebwerksgebläse (6),
- einem Vorkühlungswärmetauscher (18) zwischen der genannten Heißluft und der genannten Kaltluft, wobei der genannte Wärmetauscher am Vorderteil der Triebwerksstützstrebe (13) angeordnet ist und vom genannten Kaltluftstrom, der aus dem Gebläse austritt und nicht zu den Kompressoren geleitet wird, durchströmt wird,
- einer ersten Rohrleitung (22), die den genannten Heißlufteinlaß (16) mit dem genannten Wärmetauscher (18) verbindet,
- einem perforierten Gehäuse (23), das den Bug (13A) der Stützstrebe (13) des Triebwerks (1) bildet, wobei das genannte Gehäuse quer im aus dem Gebläse (6) kommenden Luftstrom (21) zwischen der genannten Außen- (10) und Innenverkleidung (11) des genannten Luftstroms angeordnet ist,
- einer zweiten Rohrleitung (24), die sich in der genannten Strebe (13) zum Tragwerk (14) des Flugzeugs und den weiterverarbeitenden Einrichtungen hin erstreckt, und
- Regelventile (19, 31) für die Luftmengen,
dadurch gekennzeichnet, daß die genannte erste Rohrleitung (22) eine erste durch das genannte Gehäuse (23) führende Abzweigleitung (22A) sowie eine zweite Abzweigleitung (22B) besitzt, wobei die erste (22A) und/oder die zweite Abzweigleitung (22B) mit einem Regelventil (19A, 19B) ausgestattet ist und die genannte erste (22A) und die genannte zweite Abzweigleitung (22B) mindestens annähernd parallel zueinander und quer zum Kaltluftstrom (21) verlaufen und sich an der genannten zweiten Rohrleitung (24) vereinigen.

2. Vorrichtung gemäß Anspruch 1,
dadurch gekennzeichnet, daß das genannte Gehäuse (23) einen "hufeisenförmigen" Querschnitt aufweist, der dem Querschnitt des Bugs (13A) der Strebe (13) entspricht, durch dessen konkave Rundung (23A) die genannte zweite Abzweigleitung (22B) verläuft, wobei die genannte erste Abzweigleitung (22A) durch den vorderen Teil des Gehäuses (23) führt.

3. Vorrichtung gemäß Anspruch 2,
dadurch gekennzeichnet, daß die Kühlluft, nachdem sie durch den Tauscher geströmt ist, in das Innere der Innenverkleidung (11) des aus dem Gebläse (6) kommenden Luftstroms geleitet wird, bevor sie durch vorgesehene Auslässe (25, 26) jeweils an den Brennkammern (4) und/oder den Turbinen (5) des Triebwerks (1) abgeleitet wird.

4. Vorrichtung gemäß Anspruch 2,
dadurch gekennzeichnet, daß diese Kühlluft durch einen schöpflöffelförmigen Auslaß (27) des Tauschers (18) abgeleitet wird, wobei ein Schenkel des "hufeisenförmigen" Querschnitts des Gehäuses (23) des Tauschers (18) dann die Form einer Wand (28) hat, die den genannten Auslaß abgrenzt.

5. Vorrichtung gemäß Anspruch 4,
dadurch gekennzeichnet, daß die genannte Wand eine an einem Ende gelenkig gelagerte Klappe (30) ist, die eine Temperaturregelung am Kühlluftauslaß gewährleistet.

6. Vorrichtung gemäß einem der Ansprüche 1 bis 5,
dadurch gekennzeichnet, daß ein Regelventil (31), das den Kühlluftauslaß steuert, in einer Sammelrohrleitung (32) für die genannte Luft, die durch den Wärmetauscher (18) strömt und zum Triebwerksraum (1) führt, angeordnet ist.

7. Vorrichtung gemäß Anspruch 6,
dadurch gekennzeichnet, daß der genannte Wärmetauscher (18) eine halbzylindrische Form besitzt, die von einer oberen (35) und einer hinteren Trennwand (36) begrenzt wird, wobei letztere mit der genannten Strebe (13) verbunden ist.

8. Vorrichtung gemäß Anspruch 1,
dadurch gekennzeichnet, daß der genannte Wärmetauscher (18) ein Gehäuse mit profilförmigem Umriß (37) mit einem Anschlußquerschnitt umfaßt, der ab einem der genannten Schenkel (12) zur Verbindung zwischen dem Triebwerkskörper (2) und dem Gebläsegehäuse (9) bis zum Fuß der genannten Strebe (13) zunimmt.

9. Vorrichtung gemäß Anspruch 8,
dadurch gekennzeichnet, daß das genannte Profilgehäuse (37) an seiner konkaven Fläche (38) eine luftdurchlässige Fläche aufweist, die die Schöpflöffelwirkung optimiert.

10. Vorrichtung gemäß einem der Ansprüche 1 bis 9,
dadurch gekennzeichnet, daß die Ventile zur Steuerung der Heißluft- und/oder Kaltluftmengen (19A, 19B; 31) durch hinter dem genannten Wärmetauscher (18) angeordnete Thermostate (20) gesteuert werden.

## Claims

1. Device for bleeding off hot air in an aircraft engine (1) and cooling it, the said engine comprising:
- an engine body (2) having compressors (3), combustion chambers (4) and turbines (5),
- a fan (6) arranged upstream of the engine body (2),
- a fairing (7) including, from upstream downward in the direction of flow of the air coming from the fan (6), an air intake (8), a fan shroud (9) and outer (10) and inner (11) fairings of the cold air stream originating from the fan,
- linking arms (12) between the engine body (2) and the fan shroud (9), and
- an engine (1) support pylon (13), connected, on the one hand, to the engine and, on the other hand, to the wings (14),
the said device being of the type including:
- at least one hot air take-off (16) at the outlet of one stage of the compressors of the engine,
- a cold air take-off (17) downstream of the fan (6) of the engine,
- a precooling heat exchanger (18) between the said hot air and the said cold air, the said heat exchanger being arranged at the forward part of the engine support pylon (13), being traversed by the said cold air stream which leaves the fan and which is not directed towards the compressors,
- a first trunking (22) connecting the said hot air take-off (16) to the said heat exchanger (18),
- a perforated shroud (23), forming the stem (13A) of the engine (1) support pylon (13), the said shroud being arranged transversely in the air stream (21) coming from the fan (6) between the said outer (10) and inner (11) fairings of the said air stream,
- a second trunking (24) extending into the said pylon (13) towards the wings (14) of the aircraft and the user facilities, and
- air flow rate regulating valves (19, 31), characterized in that the said first trunking (22) has a first tapping (22A) passing through the said shroud (23) and a second tapping (22B), the first (22A) and/or the second tapping (22B) being equipped with a regulating valve (19A, 19B), the said first (22A) and second (22B) tappings extending at least substantially parallel to one another and transversely to the cold air stream (21), and joining together in the region of the said second trunking (24).

2. Device according to Claim 1, characterized in that the said shroud (23) has a "horseshoe" cross section, corresponding to that of the stem (13A) of the pylon (13), the concavity (23A) of which is traversed by the said second tapping (22B), the forward part of the said shroud (23) being traversed by the said first tapping (22A).

3. Device according to Claim 2, characterized in that the ventilation air, after having passed through the exchanger, is guided within the inner fairing (11) of the air stream coming from the fan (6), before being evacuated through the outlets (25, 26) provided, respectively, in the region of the combustion chambers (4) and/or the turbines (5) of the engine (1).

4. Device according to Claim 2, characterized in that the ventilation air is evacuated through a scoop-type outlet (27) of the exchanger (18), one branch of the "horseshoe" cross section of the shroud (23) of the exchanger (18) exhibiting the shape of a wall (28) defining the said outlet.

5. Device according to Claim 4, characterized in that the said wall is a flap (30), articulated at one end, providing temperature regulation on the ventilation air outlet.

6. Device according to one of Claims 1 to 5, characterized in that a regulating valve (31) controlling the ventilation air outlet is arranged in a manifold trunking (32) for the said air, passing through the heat exchanger (18) and leading to the engine compartment (1).

7. Device according to Claim 6, characterized in that the said heat exchanger (18) exhibits a semicylindrical shape, bounded by upper (35) and rear (36) partitions, the latter being connected to the said pylon (13).

8. Device according to Claim 1, characterized in that the said heat exchanger (18) has a shroud with a profiled contour (37) of increasing cross section for its connection from one of the said linking arms (12) between the engine body (2) and the fan shroud (9), to the base of the said pylon (13).

9. Device according to Claim 8, characterized in that the said profiled shroud (37), in the region of its concave face (38), exhibits an air-permeable surface optimizing the scoop effect.

10. Device according to any one of Claims 1 to 9, characterized in that the regulating valves (19A, 19B; 31) for the hot air and/or cold air flow rates are controlled by thermostats (20), provided downstream of the said heat exchanger (18).
